# EUROPÄISCHE PATENTSCHRIFT

(11) **EP 3 475 035 B1**
(45) Veröffentlichungstag und Bekanntmachung des Hinweises auf die Patenterteilung: **26.08.2020**
(21) Anmeldenummer: 17732396.1
(22) Anmeldetag: 20.06.2017
(51) Int. Cl.: B25J 13/02, B25J 13/08

(54) **ROBOTER-BEDIENHANDGERÄTVERBUND MIT EINEM GRUNDSTEUERUNGS-LAGESENSOR**
HAND-HELD ROBOT OPERATING DEVICE COMBINATION COMPRISING A BASIC-CONTROL POSITION SENSOR
ENSEMBLE APPAREIL DE COMMANDE DE ROBOT PORTATIF MUNI D'UN CAPTEUR DE POSITION DE COMMANDE DE BASE

(30) Priorität: 23.06.2016 DE 102016211244
(43) Veröffentlichungstag der Anmeldung: 01.05.2019
(73) Patentinhaber: KUKA Deutschland GmbH, 86165 Augsburg (DE)
(72) Erfinder: KOGAN, Yevgen, 86152 Augsburg (DE)
(74) Vertreter: Tillmann, Axel
(86) Internationale Anmeldenummer: PCT/EP2017/065126
(87) Internationale Veröffentlichungsnummer: WO 2017/220605

(56) Entgegenhaltungen:
- DE-A1-102010 025 781
- DE-A1-102011 118 310
- JP-A- 2016 060 018

## Beschreibung

Die Erfindung betrifft ein Roboter-Bedienhandgerätverbund, aufweisend eine eigenständige Sicherheits-Grundsteuervorrichtung, die ein Gehäuse, ein am Gehäuse angeordnetes, sicherheitsrelevantes Schaltmittel und eine Kommunikationsvorrichtung zum steuerungstechnischen Verbinden der mobilen Sicherheits-Grundsteuervorrichtung mit einer Robotersteuerung eines Roboters aufweist, ein eigenständiges mobiles Endgerät, das eine Endgeräte-Steuerung und wenigstens einen Endgeräte-Lagesensor aufweist, der ausgebildet ist, eine Lageinformation des mobiles Endgeräts in wenigstens einem seiner Freiheitsgrade zu erfassen, sowie einen Halter, der ausgebildet ist, die Sicherheits-Grundsteuervorrichtung mit dem mobilen Endgerät in einer manuell lösbaren Verbundanordnung mechanisch zu verbinden, um den Roboter-Bedienhandgerätverbund zu bilden.

Die WO 03/088011 A2 beschreibt eine mobile, einhändig haltbare, elektronische Recheneinheit, insbesondere in Art eines sogenannten Personal-Data-Assistant (PDA) oder Handheld-Computer, mit einer softwaregesteuerten Prozessoreinheit, wenigstens einer mit dieser verbundenen Speichervorrichtung zur Hinterlegung von abzuarbeitenden Softwaremodulen und/oder Daten, wenigstens einer Anzeigevorrichtung zur visuell erfassbaren Ausgabe von Informationen und mit wenigstens einer Eingabevorrichtung zumindest zur Beeinflussung der Betriebsfunktionen der Recheneinheit und/oder zur Eingabe von Daten, wobei die Anzeige- und Eingabevorrichtung in Art eines berührungssensitiven Bildschirms, beispielsweise in Form eines Touch-Screens, baulich überlagert bzw. funktionell kombiniert sind und mit wenigstens einer am Gehäuse der Recheneinheit standardmäßig ausgebildeten Schnittstelle, welche zur Verbindung mit peripheren, elektronischen oder elektrischen Geräten, wie z. B. einem Personal-Computer, vorgesehen ist, wobei die standardmäßig ausgebildete Schnittstelle oder eine eigenständig ausgebildete Schnittstelle zur Verbindung mit wenigstens einem Sicherheitsschaltelement in Art eines Not-Aus-Schalters und/oder eines Zustimmtasters vorgesehen ist.

Die DE 10 2010 025 781 A1 beschreibt eine tragbare Sicherheitseingabeeinrichtung mit wenigstens einem Eingabemittel zum Eingeben eines Sicherheitssignals an eine Robotersteuerung, welche eine Schnittstelle aufweist zur Kommunikation mit einem mit der Sicherheitseingabeeinrichtung, insbesondere lösbar, verbundenen Handgerät zum Steuern eines Roboters mittels Kommunikation mit dieser Robotersteuerung.

Die DE 10 2011 118310 A1 zeigt ein mobiles Bediengerät für Steuerungen von Spritzgussanlagen, mit einem Bedienteil und einem Visualisierungsteil, wobei das mobile Bediengerät sicherheitsrelevante und sicherheitsirrelevante Bedienfunktionen aufweist, wobei der Bedienteil und der Visualisierungsteil getrennte voneinander betreibbar sind und dass die sicherheitstechnisch relevanten Bedienfunktionen über den Visualisierungsteil nur dann ausführbar sind, wenn dieser mit dem Bedienteil verbunden ist.

Die JP 2016 060018 A beschreibt ein Roboterbediengerät mit einer Sicherheitseinrichtung, welche ein tragbares Terminal als Display und Eingabeelement nutzen kann.

Aufgabe der Erfindung ist es, ein Roboter-Bedienhandgerätverbund zu schaffen, bei dem eine eindeutige und technisch sichere Zuordnung von mobiler Sicherheits-Grundsteuervorrichtung und mobilem Endgerät erreicht werden kann.

Die Aufgabe der Erfindung wird gelöst durch ein Roboter-Bedienhandgerätverbund, aufweisend:
- eine eigenständige Sicherheits-Grundsteuervorrichtung, die ein Gehäuse, ein am Gehäuse angeordnetes, sicherheitsrelevantes Schaltmittel und eine Kommunikationsvorrichtung zum steuerungstechnischen Verbinden der mobilen Sicherheits-Grundsteuervorrichtung mit einer Robotersteuerung eines Roboters aufweist,
- ein eigenständiges mobiles Endgerät, das eine Endgeräte-Steuerung und wenigstens einen Endgeräte-Lagesensor aufweist, der ausgebildet ist, eine Lageinformation des mobiles Endgeräts in wenigstens einem seiner Freiheitsgrade zu erfassen,
- sowie einen Halter, der ausgebildet ist, die Sicherheits-Grundsteuervorrichtung mit dem mobilen Endgerät in einer manuell lösbaren Verbundanordnung mechanisch zu verbinden, um den Roboter-Bedienhandgerätverbund zu bilden, wobei die Sicherheits-Grundsteuervorrichtung wenigstens einen Grundsteuerungs-Lagesensor aufweist, der ausgebildet ist, eine Lageinformation der mobilen Sicherheits-Grundsteuervorrichtung in wenigstens einem seiner Freiheitsgrade zu erfassen.

Eine eindeutige Zuordnung, d.h. das Vorliegen einer festen mechanischen Kopplung von mobiler Sicherheits-Grundsteuervorrichtung und mobilem Endgerät kann also dadurch festgestellt werden, dass einerseits eine erste Information über die momentane Lage der mobiler Sicherheits-Grundsteuervorrichtung erlangt wird und andererseits eine zweite Information über die momentane Lage des mobilen Endgeräts erlangt wird und dann die erste Information mit der zweiten Information verglichen werden kann, um feststellen zu können, ob sowohl die Sicherheits-Grundsteuervorrichtung und das mobile Endgerät derselben Lageänderung unterliegt. Insoweit kann festgestellt werden, ob die Sicherheits-Grundsteuervorrichtung und das mobile Endgerät sich synchron miteinander in derselben Weise bewegen, was darauf schließen lässt, dass die Sicherheits-Grundsteuervorrichtung und das mobile Endgerät mechanisch starr gekoppelt sind und somit einen Bedienhandgerätverbund bilden.

Die Sicherheits-Grundsteuervorrichtung kann insbesondere eine mobile Sicherheits-Grundsteuervorrichtung sein. Alternativ kann die Sicherheits-Grundsteuervorrichtung auch eine stationäre Sicherheits-Grundsteuervorrichtung sein.

Generell können sicherheitsrelevante Einrichtungen, wie Stopp-Taster, Zustimmungstaster usw. vorgesehen sein, die über die Sicherheits-Grundsteuervorrichtung und ggf. über eine sichere Kommunikationsverbindung zur Robotersteuerung angekoppelt sein können, um bei einer kritischen Aktion am Roboter initiiert vom Eingabegerät eingreifen zu können.

Die Sicherheits-Grundsteuervorrichtung kann wenigstens ein sicherheitsrelevantes Schaltmittel aufweisen, das ein Nothalt-Auslösemittel, wenigstens eine Zustimmungseinrichtung, und/oder wenigstens ein Betriebsartauswahlmittel sein kann. Die Sicherheits-Grundsteuervorrichtung kann darüber hinaus auch ein Anzeigemittel, insbesondere ein elektronisches Display aufweisen. Zumindest das wenigstens eine Nothalt-Auslösemittel, das wenigstens eine Zustimmungseinrichtung und/oder das wenigstens eine Betriebsartauswahlmittel können in sicherer Technik mit einer Robotersteuerung eines Roboters zu dessen Ansteuerung steuerungstechnisch verbunden sein, insbesondere mit dieser kommunizieren. Die Sicherheits-Grundsteuervorrichtung ist als eine eigenständige Sicherheits-Grundsteuervorrichtung ausgebildet, die auch ohne mit dem mobilen Endgerät steuerungstechnisch verbunden zu sein, mit seinen Grundfunktionen den Roboter steuern kann und zwar über eine sichere Verbindung mit der Robotersteuerung, die durch die Kommunikationsvorrichtung der Sicherheits-Grundsteuervorrichtung eingerichtet sein kann. Die Sicherheits-Grundsteuervorrichtung kann außerdem auch wenigstens ein nicht-sicherheitsrelevantes Schaltmittel aufweisen

Der wenigstens eine Grundsteuerungs-Lagesensor und der wenigstens eine Endgeräte-Lagesensor müssen dabei nicht notweniger Weise dieselbe physikalische Größe erfassen oder messen. Es ist ausreichend, wenn sich aus der Lageinformation der mobilen Sicherheits-Grundsteuervorrichtung und der Lageinformation des mobilen Endgeräts ableiten lässt, dass beide Geräte bzw. Vorrichtungen in ihren jeweiligen Lagen im Raum voneinander abhängig sind.

Unter der Lage im Raum wird, insbesondere auch hinsichtlich der Begriffe Lagesensor und Lageinformation, verstanden, dass es sich dabei um ein oder mehrere physikalische Größen handeln kann, welche die Positionen des Objekts (Sicherheits-Grundsteuervorrichtung und mobiles Endgerät) im Raum (kartesische Raumrichtungen X, Y und Z), die Orientierungen des Objekts im Raum (kartesische Rotationen um die Raumachsen A, B und C), und all deren mathematische Ableitungen, wie Geschwindigkeiten (X', Y', Z', A', B', C') oder Beschleunigungen (X", Y", Z", A", B", C") sein können.

Der Grundsteuerungs-Lagesensor kann in allen Ausführungsvarianten von Sensorenarten im Speziellen ausgebildet sein, die Lageinformation der mobilen Sicherheits-Grundsteuervorrichtung in wenigstens einem seiner Freiheitsgrade zu erfassen, welcher derselbe Freiheitsgrad ist, in dem auch der Endgeräte-Lagesensor die Lageinformation des mobilen Endgeräts erfasst. Dadurch ist ein Vergleich am einfachsten möglich, ohne dass gesonderte Umrechnungen erfolgen müssen.

Die jeweiligen Lage-Sensoren von mobiler Sicherheits-Grundsteuervorrichtung und mobilem Endgerät können unterschiedliche physikalische Größen erfassen oder messen. Auch kann die Sicherheits-Grundsteuervorrichtung zwei oder mehrere Lagesensoren aufweisen, die entweder dieselbe physikalische Größe erfassen oder die verschiedene physikalische Größen erfassen. So kann der jeweilige Lagesensor beispielsweise ein Positionssensor, ein Orientierungssensor, aber auch ein Magnetfeldsensor, ein Gyroskop und/oder ein optischer Sensor sein.

Der Endgeräte-Lagesensor kann demgemäß ein Endgeräte-Magnetfeldsensor sein, der ausgebildet ist, eine magnetische Feldinformation bezüglich des mobiles Endgeräts in wenigstens einem seiner Freiheitsgrade zu erfassen, und/oder der Grundsteuerungs-Lagesensor kann ein Grundsteuerungs-Magnetfeldsensor sein, der ausgebildet ist, eine magnetische Feldinformation bezüglich der mobilen Sicherheits-Grundsteuervorrichtung in wenigstens einem ihrer Freiheitsgrade zu erfassen.

Alternativ oder ergänzend zu einem Magnetfeldsensor kann der Endgeräte-Lagesensor aber auch ein Endgeräte-Optosensor sein, der ausgebildet ist, eine vom mobilen Endgerät aus aufnehmbare Bildinformation in wenigstens einem seiner Freiheitsgrade zu erfassen, und/oder der Grundsteuerungs-Lagesensor kann ein Grundsteuerungs-Optosensor sein, der ausgebildet ist, eine von der mobilen Sicherheits-Grundsteuervorrichtung aus aufnehmbare Bildinformation in wenigstens einem ihrer Freiheitsgrade zu erfassen.

Der Grundsteuerungs-Optosensor und/oder der Endgeräte-Optosensor kann beispielsweise eine Kamera sein, welche ein Bild aus der Umgebung erfasst und zwar von einem Standort aus, der sich an der mobilen Sicherheits-Grundsteuervorrichtung bzw. an dem mobilen Endgerät befindet. Die Kamera kann im Speziellen beispielsweise dazu ausgebildet sein einen optischen Fluss zu erfassen oder zu messen. Aus dem optischen Fluss kann dann beispielsweise eine Information über die Bewegung, insbesondere die Geschwindigkeit und/oder die Beschleunigung des mit der Kamera verbundenen Objekts (Sicherheits-Grundsteuervorrichtung bzw. mobiles Endgerät) bestimmt werden.

Wenn beispielsweise an dem einen Objekt (Sicherheits-Grundsteuervorrichtung oder mobiles Endgerät) aus dem optischen Fluss eine Drehung des Objekts um eine bestimmte kartesische Raumachse festgestellt werden kann, so kann beispielsweise mittels eines Magnetfeldsensors oder eines Gyroskops an dem anderen Objekt (mobiles Endgerät oder Sicherheits-Grundsteuervorrichtung) für dieselbe kartesische Raumachse dessen Drehung bestimmt werden. Ein Vergleich liefert dann das Ergebnis einer mechanischen Kopplung, wenn die durch den optischen Fluss bestimmte Drehung des einen Objekts mit der durch den Magnetfeldsensor oder durch das Gyroskop an dem anderen Objekt bestimmte Drehung des anderen Objekts übereinstimmt. Dabei muss nicht notwendiger Weise die Lageinformation quantitativ genau gemessen werden. Es ist vielmehr unter Umständen bereist ausreichend, wenn nur lediglich die zeitliche Übereinstimmung der Änderungen an beiden Objekten festgestellt werden kann.

Alternativ oder ergänzend zu einem Magnetfeldsensor und/oder einem Optosensor kann der Endgeräte-Lagesensor insbesondere ein Endgeräte-Beschleunigungssensor sein, der ausgebildet ist, eine Beschleunigungsinformation des mobilen Endgeräts in wenigstens einem seiner Freiheitsgrade zu erfassen, und/oder der Grundsteuerungs-Lagesensor kann ein Grundsteuerungs-Beschleunigungssensor sein, der ausgebildet ist, eine Beschleunigung der mobilen Sicherheits-Grundsteuervorrichtung in wenigstens einem ihrer Freiheitsgrade zu erfassen. Der Endgeräte-Lagesensor kann beispielsweise auch ein Gravitationssensor bzw. ein Gravitationsfeldsensor sein.

Der Halter kann generell ein separates Bauteil sein. Alternativ kann der Halter ein Teil der mobilen Sicherheits-Grundsteuervorrichtung und/oder ein Teil des mobilen Endgeräts sein, bzw. der Halter kann an der mobilen Sicherheits-Grundsteuervorrichtung und/oder an dem mobilen Endgerät ausgebildet sein.

In einer speziellen Ausführungsvariante kann der Roboter-Bedienhandgerätverbund aufweisen:
- eine eigenständige Sicherheits-Grundsteuervorrichtung, die ein Gehäuse, ein am Gehäuse angeordnetes sicherheitsrelevantes Schaltmittel, insbesondere ein Nothalt-Schaltmittel, ein Zustimmtaster und/oder ein Betriebsarten-Wahlschalter, und eine Kommunikationsvorrichtung zum steuerungstechnischen Verbinden der mobilen Sicherheits-Grundsteuervorrichtung mit einer Robotersteuerung eines Roboters aufweist,
- ein eigenständiges mobiles Endgerät, das eine Endgeräte-Steuerung und wenigstens einen Endgeräte-Beschleunigungssensor aufweist, der ausgebildet ist, ein Beschleunigung des mobiles Endgeräts in wenigstens einem seiner Freiheitsgrade zu messen,
- sowie einen Halter, der ausgebildet ist, die Sicherheits-Grundsteuervorrichtung mit dem mobilen Endgerät in einer manuell lösbaren Verbundanordnung mechanisch zu verbinden, um den Roboter-Bedienhandgerätverbund zu bilden, wobei die Sicherheits-Grundsteuervorrichtung wenigstens einen Grundsteuerungs-Beschleunigungssensor aufweist, der ausgebildet ist, ein Beschleunigung der mobilen Sicherheits-Grundsteuervorrichtung in wenigstens einem seiner Freiheitsgrade zu messen, welcher derselbe Freiheitsgrad ist, in dem auch der Endgeräte-Beschleunigungssensor die Beschleunigung des mobilen Endgeräts misst.

Die Sicherheits-Grundsteuervorrichtung kann wenigstens ein Nothalt-Auslösemittel, wenigstens eine Zustimmungseinrichtung, wenigstens ein Betriebsartauswahlmittel und/oder ein Anzeigemittel, insbesondere ein elektronisches Display aufweisen. Zumindest das wenigstens eine Nothalt-Auslösemittel, das wenigstens eine Zustimmungseinrichtung und/oder das wenigstens eine Betriebsartauswahlmittel können in sicherer Technik mit einer Robotersteuerung eines Roboters zu dessen Ansteuerung steuerungstechnisch verbunden sein, insbesondere mit dieser kommunizieren. Die Sicherheits-Grundsteuervorrichtung ist als eine eigenständige Sicherheits-Grundsteuervorrichtung ausgebildet, die auch ohne mit dem mobilen Endgerät steuerungstechnisch verbunden zu sein, mit seinen Grundfunktionen den Roboter steuern kann und zwar über eine sichere Verbindung mit der Robotersteuerung, die durch die Kommunikationsvorrichtung der Sicherheits-Grundsteuervorrichtung eingerichtet sein kann.

Die Sicherheits-Grundsteuervorrichtung ist demgemäß eine von der Robotersteuerung und dem Roboter separate Vorrichtung, die von einem Roboterbediener in der Hand gehalten und ggf. herumgetragen wird, demgemäß also mobil ist. In einer solchen Ausführung ist die Sicherheits-Grundsteuervorrichtung also nicht nur dann zum Ansteuern des Roboters ausgebildet und/oder eingerichtet, wenn das mobile Endgerät mit der Sicherheits-Grundsteuervorrichtung mechanisch und steuerungstechnisch verbunden ist, sondern auch dann zum Ansteuern des Roboters ausgebildet und/oder eingerichtet, wenn das mobile Endgerät von der Sicherheits-Grundsteuervorrichtung entfernt ist, insbesondere entnommen ist. In einem solchen Falle kann ein gewisser Umfang an Grundsteuerfunktionen über Eingabemittel angesteuert werden, welche Teil der Sicherheits-Grundsteuervorrichtung sind. Dies können insbesondere das bereits erwähnte Nothalt-Auslösemittel, die Zustimmungseinrichtung und/oder das Betriebsartauswahlmittel sein.

Darüber hinausgehende Funktionen des Roboters oder der Robotersteuerung können über das mobile Endgerät, insbesondere dessen Eingabemittel, wie ein Touchscreen angesteuert werden, wenn das mobile Endgerät steuerungstechnisch mit der Robotersteuerung und somit mit dem Roboter verbunden ist. Da das mobile Endgerät mit der Sicherheits-Grundsteuervorrichtung einen eindeutigen Roboter-Bedienhandgerätverbund bilden soll, ist sicherzustellen, dass das mobile Endgerät nicht nur steuerungstechnisch verbunden ist, sondern auch mechanisch an der mobilen Sicherheits-Grundsteuervorrichtung befestigt ist. Um sicherzustellen, dass nur dasjenige mobile Endgerät mit der mobilen Sicherheits-Grundsteuervorrichtung steuerungstechnisch verbunden wird, das an die Sicherheits-Grundsteuervorrichtung mechanisch angekoppelt ist, soll automatisch feststellbar sein, ob das mobile Endgerät mit der mobilen Sicherheits-Grundsteuervorrichtung mechanisch angekoppelt ist oder mechanisch nicht gekoppelt ist.

Indem die Sicherheits-Grundsteuervorrichtung wenigstens einen Grundsteuerungs-Beschleunigungssensor aufweist, der ausgebildet ist, eine Beschleunigung der mobilen Sicherheits-Grundsteuervorrichtung in wenigstens einem seiner Freiheitsgrade zu messen, welcher derselbe Freiheitsgrad ist, in dem auch der Endgeräte-Beschleunigungssensor die Beschleunigung des mobilen Endgeräts misst, kann festgestellt werden, ob sowohl das mobile Endgerät, als auch die Sicherheits-Grundsteuervorrichtung denselben Beschleunigungen ausgesetzt sind. Wenn das mobile Endgerät und die Sicherheits-Grundsteuervorrichtung denselben Beschleunigungen ausgesetzt sind, ist anzunehmen, dass das mobile Endgerät tatsächlich mit der mobilen Sicherheits-Grundsteuervorrichtung mechanisch gekoppelt ist. Wenn das mobile Endgerät und die Sicherheits-Grundsteuervorrichtung voneinander abweichenden Beschleunigungen ausgesetzt sind, steht fest, dass das mobile Endgerät mechanisch unabhängig von der mobilen Sicherheits-Grundsteuervorrichtung ist und somit keine mechanische Kopplung zwischen mobilem Endgerät und mobiler Sicherheits-Grundsteuervorrichtung besteht.

Da der bestimmungsgemäße Gebrauch der mobilen Sicherheits-Grundsteuervorrichtung und demgemäß auch des Roboter-Bedienhandgerätverbunds darin besteht, dass es von einer Person in der Hand gehalten wird, kann davon ausgegangen werden, dass in einem verwendeten Zustand die Sicherheits-Grundsteuervorrichtung und demgemäß auch des Roboter-Bedienhandgerätverbunds nahezu stets in Bewegung ist und somit laufend Beschleunigungskräfte gemessen werden können. Bei einer manuellen Handhabung kann somit davon ausgegangen werden, dass im Falle, dass sowohl am mobilen Endgerät, als auch an der mobilen Sicherheits-Grundsteuervorrichtung zu selben Zeitpunkten dieselben Beschleunigungskräfte gemessen werden, diese beiden Geräteverbund-Bestandteile (mobiles Endgerät und Sicherheits-Grundsteuervorrichtung) eine mechanisch fest verbundene Einheit bilden. Dies ist dann der Fall, wenn das mobile Endgerät mechanisch an die Sicherheits-Grundsteuervorrichtung angekoppelt ist, wie dies bestimmungsgemäß auch vorgesehen ist. Davon unbeachtlich bleibt eine ggf. alleinige Verwendung der mobilen Sicherheits-Grundsteuervorrichtung in steuerungstechnischer Verbindung mit der Robotersteuerung, die auch ohne die Nutzung eines mobilen Endgeräts möglich sein kann. Auszuschließen ist lediglich, dass ein mobiles Endgerät zur Steuerung sicherheitskritischer Zustände, insbesondere zum Bewegen des Roboters legitimiert wäre, das nicht ordnungsgemäß mechanisch an seine zugeordnete Sicherheits-Grundsteuervorrichtung angekoppelt ist. Ein von der mobilen Sicherheits-Grundsteuervorrichtung mechanisch gelöstes mobile Endgerät kann jedoch weiterhin zum Ansteuern von sicherheitsunkritischen Zuständen und Funktionen genutzt werden, so zum Beispiel um auf einem Bildschirm des mobilen Endgeräts Informationen über den Roboter, beispielsweise Werte über bestimmte Systemzustände des Roboters ablesen zu können.

Die meisten handelsüblichen mobilen Endgeräte, wie beispielsweise Tablet-PCs oder Smartphones, verfügen über einen oder mehrere Beschleunigungssensoren, die üblicherweise zur Erkennung der Orientierung und entsprechender Anpassung der Bildschirmdrehung verwendet werden. Es wird vorgeschlagen, identische, analoge oder ähnliche Beschleunigungssensoren auch an der mobilen Sicherheits-Grundsteuervorrichtung oder an dem Halter vorzusehen, insbesondere dort einzubauen, so dass in jedem Bediengeräteteil des Roboter-Bedienhandgerätverbunds jeweils wenigstens ein Beschleunigungssensor vorhanden ist. Werden nun beide logisch einander zugeordnete Geräteteile mechanisch aneinander oder ineinander gefügt und danach bewegt, messen beide Sensor-Sätze die gleichen Beschleunigungen bis auf die evtl. vorhandenen Abweichungen/Unterschiede in der Lage oder Orientierung, die ggf. über eine einmalige Kalibrierung festgestellt und berücksichtigt werden kann. Sind die Messungen also identisch oder nahezu identisch, kann davon ausgegangen werden, dass beide Geräte aneinander bzw. ineinander gefügt sind. Sind die Messungen deutlich unterschiedlich, muss davon ausgegangen werden, dass die Geräte nicht ineinander gefügt sind und beispielsweise das falsche mobile Endgerät über den Halter mit der mobilen Sicherheits-Grundsteuervorrichtung mechanisch gekoppelt wurde.

Ein Vergleich der Messwerte kann jederzeit erfolgen, wenn eine Signalveränderung festgestellt wird. Damit kann insbesondere auch erkannt werden, dass die Geräte räumlich wieder getrennt werden, so dass daraufhin beispielsweise die logische Zuordnung wieder aufgehoben werden kann. Hierbei kann die Tatsache ausgenutzt werden, dass bei der physikalischen Trennung der Geräte mindestens ein Geräteteil bewegt werden muss, so dass auf jeden Fall unterschiedliche Beschleunigungen gemessen werden.

Ist eines oder beide Sensorsätze beispielsweise defekt oder fehlerhaft, ist es sehr unwahrscheinlich, dass dann die Signalverläufe bei nicht ineinandergefügten Geräten über eine gewisse Zeit gleich sind, außer, wenn der Fehler dazu führt, dass nichts gemessen wird, was allerdings auch als Fehler gewertet und erkannt werden kann.

In allen Ausführungsformen kann das mobile Endgerät demgemäß einen programmgesteuerten elektronischen Rechner, d.h. die Endgeräte-Steuerung, insbesondere auch ein Touch-Display und ein auf dem elektronischen Rechner gespeichertes Programm aufweisen, das zur Erstellung von Roboterprogrammen und/oder zum Ansteuern eines Roboters, insbesondere zum Bewegen eines Roboterarms ausgebildet ist und das beispielsweise über das Touch-Display zu bedienen ist. Generell wird unter einem mobilen Endgerät ein tragbares Kommunikationsgerät verstanden, das ortsungebunden zur Sprach- und/oder Datenkommunikation verwendet werden können. Mobile Endgeräte können demgemäß Mobiltelefone, Smartphones, Tablet-PCs, Netbooks und/oder Notebooks sein.

Wenigstens eine aus der Gruppe von Endgeräte-Steuerung des mobilen Endgeräts, mobiler Sicherheits-Grundsteuervorrichtung und Robotersteuerung kann ausgebildet sein, von dem Endgeräte-Lagesensor erfassten Lageinformationen des mobilen Endgeräts mit den von dem Grundsteuerungs-Lagesensor erfassten Lageinformationen der mobilen Sicherheits-Grundsteuervorrichtung zu vergleichen und bei einer Übereinstimmung der Lageinformationen des mobilen Endgeräts mit den Lageinformationen der mobilen Sicherheits-Grundsteuervorrichtung ein den mechanischen Verbindungszustand von mobilem Endgerät und mobiler Sicherheits-Grundsteuervorrichtung kennzeichnendes Signal zu erzeugen.

Beispielsweise kann die Endgeräte-Steuerung des mobilen Endgeräts ausgebildet sein, von dem Endgeräte-Beschleunigungssensor gemessene Beschleunigungswerte an die Robotersteuerung zu übermitteln, die Sicherheits-Grundsteuervorrichtung kann dabei ausgebildet sein, von dem Grundsteuerungs-Beschleunigungssensor gemessene Beschleunigungswerte über die Kommunikationsvorrichtung an die Robotersteuerung zu übermitteln und die Robotersteuerung kann dabei eingerichtet sein, die Beschleunigungswerte des mobilen Endgeräts mit den Beschleunigungswerten der mobilen Sicherheits-Grundsteuervorrichtung zu vergleichen und bei einer Übereinstimmung der Beschleunigungswerte des mobilen Endgeräts mit den Beschleunigungswerten der mobilen Sicherheits-Grundsteuervorrichtung ein den mechanischen Verbindungszustand von mobilem Endgerät und mobiler Sicherheits-Grundsteuervorrichtung kennzeichnendes Signal zu erzeugen.

Aufgrund des erzeugten Signals kann dann eine Aktivierung des mobilen Endgeräts erfolgen, derart, dass beispielsweise eine oder mehrere Funktionen des Roboters, der Robotersteuerung oder des Roboterprogramms durch Eingabemittel des mobilen Endgeräts gesteuert und/oder durch Ausgabemittel, wie dem Bildschirm des mobilen Endgeräts überwacht bzw. angezeigt werden können. Fehlt ein derartiges Signal, wird das mobile Endgerät nicht aktiviert, oder es wird eine bereits bestehende Aktivierung beendet und es sind keinerlei Funktionen des Roboters, der Robotersteuerung oder des Roboterprogramms durch die Eingabemittel des mobilen Endgeräts möglich. Gegebenenfalls sind in einem solchen Zustand dann auch die Ausgabemittel deaktiviert und es werden keine Anzeigen auf dem Bildschirm des mobilen Endgeräts angezeigt.

Die Robotersteuerung kann eingerichtet sein, im Falle eines durch das Signal festgestellten vorliegenden mechanischen Verbindungszustands von mobilem Endgerät und mobiler Sicherheits-Grundsteuervorrichtung, eine robotersteuerungstechnische Kommunikation der mobilen Sicherheits-Grundsteuervorrichtung mit dem mobilen Endgerät zuzulassen und die Robotersteuerung kann außerdem eingerichtet sein, im Falle eines durch das Signal festgestellten fehlenden mechanischen Verbindungszustands von mobilem Endgerät und mobiler Sicherheits-Grundsteuervorrichtung, eine robotersteuerungstechnische Kommunikation der mobilen Sicherheits-Grundsteuervorrichtung mit dem mobilen Endgerät zu unterbinden.

Die Endgeräte-Steuerung des mobilen Endgeräts kann ausgebildet sein, von dem Endgeräte-Beschleunigungssensor gemessene Beschleunigungswerte an die Sicherheits-Grundsteuervorrichtung zu übermitteln, die Sicherheits-Grundsteuervorrichtung kann dabei ausgebildet sein, von dem Grundsteuerungs-Beschleunigungssensor gemessene Beschleunigungswerte aufzunehmen und die Sicherheits-Grundsteuervorrichtung kann dabei eingerichtet sein, die Beschleunigungswerte des mobilen Endgeräts mit den Beschleunigungswerten der mobilen Sicherheits-Grundsteuervorrichtung zu vergleichen und bei einer Übereinstimmung der Beschleunigungswerte des mobilen Endgeräts mit den Beschleunigungswerten der mobilen Sicherheits-Grundsteuervorrichtung ein den mechanischen Verbindungszustand von mobilem Endgerät und mobiler Sicherheits-Grundsteuervorrichtung kennzeichnendes Signal zu erzeugen.

Auch hierbei kann aufgrund des erzeugten Signals dann eine Aktivierung des mobilen Endgeräts erfolgen, derart, dass beispielsweise eine oder mehrere Funktionen des Roboters, der Robotersteuerung oder des Roboterprogramms durch Eingabemittel des mobilen Endgeräts gesteuert und/oder durch Ausgabemittel, wie dem Bildschirm des mobilen Endgeräts überwacht bzw. angezeigt werden können. Fehlt ein derartiges Signal wird das mobile Endgerät nicht aktiviert, oder es wird eine bereits bestehende Aktivierung beendet und es sind keinerlei Funktionen des Roboters, der Robotersteuerung oder des Roboterprogramms durch die Eingabemittel des mobilen Endgeräts möglich. Gegebenenfalls sind in einem solchen Zustand dann auch die Ausgabemittel deaktiviert und es werden keine Anzeigen auf dem Bildschirm des mobilen Endgeräts angezeigt.

Alternativ kann die Endgeräte-Steuerung des mobilen Endgeräts selbst ausgebildet sein, von dem Endgeräte-Beschleunigungssensor gemessene Beschleunigungswerte mit den Beschleunigungswerten der mobilen Sicherheits-Grundsteuervorrichtung zu vergleichen und bei einer Übereinstimmung der Beschleunigungswerte des mobilen Endgeräts mit den Beschleunigungswerten der mobilen Sicherheits-Grundsteuervorrichtung ein den mechanischen Verbindungszustand von mobilem Endgerät und mobiler Sicherheits-Grundsteuervorrichtung kennzeichnendes Signal zu erzeugen.

Die Sicherheits-Grundsteuervorrichtung kann eingerichtet sein, im Falle eines durch das Signal festgestellten vorliegenden mechanischen Verbindungszustands von mobilem Endgerät und mobiler Sicherheits-Grundsteuervorrichtung, eine robotersteuerungstechnische Kommunikation der mobilen Sicherheits-Grundsteuervorrichtung mit dem mobilen Endgerät zuzulassen, wobei die Sicherheits-Grundsteuervorrichtung eingerichtet ist, im Falle eines durch das Signal festgestellten fehlenden mechanischen Verbindungszustands von mobilem Endgerät und mobiler Sicherheits-Grundsteuervorrichtung, eine robotersteuerungstechnische Kommunikation der mobilen Sicherheits-Grundsteuervorrichtung mit dem mobilen Endgerät zu unterbinden.

Grundsätzlich kann es beispielsweise möglich sein, dass das mobile Endgerät in mehreren verschiedenen Orientierungen mechanisch mit der mobilen Sicherheits-Grundsteuervorrichtung verbunden wird. So kann beispielsweise ein als Tablet-PC ausgebildetes mobiles Endgerät beispielsweise einerseits im Hochformat und andererseits im Querformat an der mobilen Sicherheits-Grundsteuervorrichtung befestigt werden. Dies bedeutet, dass der wenigstens eine Endgeräte-Beschleunigungssensor und der wenigstens eine Grundsteuerungs-Beschleunigungssensor zunächst in Abhängigkeit der momentanen räumlichen Zuordnung, insbesondere nach dem Ankoppeln durch den Halter, aufeinander abgestimmt werden müssen, d.h. eine automatische Zuordnung der Messrichtungen, d.h. der Messfreiheitsgrade erfolgen muss. Dies kann durch ein Kalibrieren des einen Beschleunigungssensors des einen Geräteverbund-Bestandteils zu dem jeweils anderen Beschleunigungssensor des anderen Geräteverbund-Bestandteils stattfinden.

Demgemäß kann die Robotersteuerung, die Endgeräte-Steuerung und/oder die Sicherheits-Grundsteuervorrichtung eingerichtet sein, den Grundsteuerungs-Lagesensor bezüglich des Endgeräte-Lagesensors zu kalibrieren. Insbesondere kann die Robotersteuerung, die Endgeräte-Steuerung und/oder die Sicherheits-Grundsteuervorrichtung eingerichtet sein, den Grundsteuerungs-Beschleunigungssensor bezüglich des Endgeräte-Beschleunigungssensors zu kalibrieren.

Demgemäß kann alternativ oder ergänzend aber auch die Robotersteuerung, die Endgeräte-Steuerung und/oder die Sicherheits-Grundsteuervorrichtung eingerichtet sein, den Endgeräte-Lagesensor bezüglich des Grundsteuerungs-Lagesensors zu kalibrieren. Insbesondere kann die Robotersteuerung, die Endgeräte-Steuerung und/oder die Sicherheits-Grundsteuervorrichtung eingerichtet sein, den Endgeräte-Beschleunigungssensor bezüglich des Grundsteuerungs-Beschleunigungssensors zu kalibrieren.

Der wenigstens eine Endgeräte-Lagesensor kann Teil einer Inertial-Messeinheit des mobilen Endgeräts sein. Insbesondere kann der wenigstens eine Endgeräte-Beschleunigungssensor Teil einer Inertial-Messeinheit des mobilen Endgeräts sein.

Der wenigstens eine Grundsteuerungs-Lagesensor kann Teil einer Inertial-Messeinheit der mobilen Sicherheits-Grundsteuervorrichtung sein. Insbesondere kann der wenigstens eine Grundsteuerungs-Beschleunigungssensor Teil einer Inertial-Messeinheit der mobilen Sicherheits-Grundsteuervorrichtung sein.

Eine jeweilige Inertial-Messeinheit kann beispielsweise drei im kartesischen Raum zueinander senkrecht ausgerichtete Sensorelemente aufweisen, die jeweils eine lineare Beschleunigung in X-Richtung, in Y-Richtung und Z-Richtung messen. Darüber hinaus können beispielsweise drei weitere im kartesischen Raum zueinander senkrecht ausgerichtete Sensorelemente vorgesehen sein, die jeweils eine Drehbeschleunigung um eine X-Drehachse, eine Y- Drehachse und eine Z- Drehachse messen.

Die Robotersteuerung, das mobile Endgerät und/oder die Sicherheits-Grundsteuervorrichtung kann eingerichtet sein, die Beschleunigungswerte des mobilen Endgeräts mit den Beschleunigungswerten der mobilen Sicherheits-Grundsteuervorrichtung zu vergleichen und ein den mechanischen Verbindungszustand von mobilem Endgerät und mobiler Sicherheits-Grundsteuervorrichtung kennzeichnendes Signal zu erzeugen, immer dann, wenn wenigstens einer von Endgeräte-Beschleunigungssensor und Grundsteuerungs-Beschleunigungssensor eine Beschleunigung des mobilen Endgeräts und/oder der mobilen Sicherheits-Grundsteuervorrichtung misst.

Der Grundsteuerungs-Beschleunigungssensor kann an dem Gehäuse der mobilen Sicherheits-Grundsteuervorrichtung oder an dem mit der mobilen Sicherheits-Grundsteuervorrichtung verbundenen Halter angeordnet sein.

Ein konkretes Ausführungsbeispiel der Erfindung ist in der nachfolgenden Beschreibung unter Bezugnahme auf die beigefügten Figuren näher erläutert. Konkrete Merkmale dieses exemplarischen Ausführungsbeispiels können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine schematische Darstellung eines Roboters aufweisend einen Roboterarm und eine Robotersteuerung, sowie einen erfindungsgemäßen Roboter-Bedienhandgerätverbund bestehend aus einer mobilen Sicherheits-Grundsteuervorrichtung und einem mobilen Endgerät,
- Fig. 2: eine schematische Darstellung einer beispielhaften Ausführungsform eines mechanisch gekoppelten Roboter-Bedienhandgerätverbunds mit einem erfindungsgemäßen Grundsteuerungs-Beschleunigungssensor in einem Verbundzustand, und
- Fig. 3: eine schematische Schnittdarstellung des mechanisch entkoppelten Roboter-Bedienhandgerätverbunds gemäß Fig. 2, bei dem das mobile Endgerät von der mobilen Sicherheits-Grundsteuervorrichtung mechanisch getrennt ist.

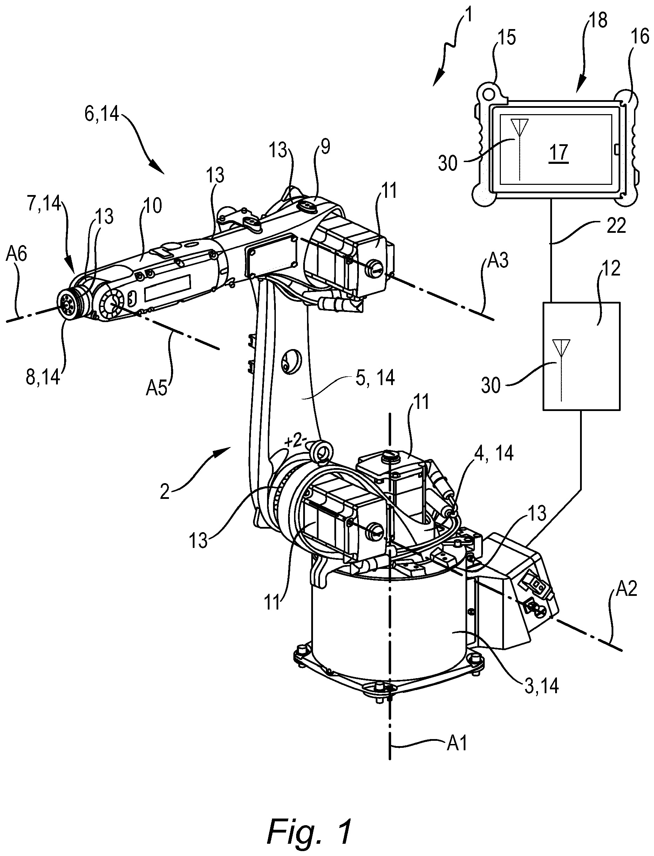

Die Fig. 1 zeigt einen Roboter 1, der einen Roboterarm 2 und eine Robotersteuerung 12 aufweist. Der Roboterarm 2 umfasst im Falle des vorliegenden Ausführungsbeispiels mehrere, nacheinander angeordnete und mittels Gelenke 13 verbundene Glieder 14. Bei den Gliedern 14 handelt es sich insbesondere um ein Gestell 3 und ein relativ zum Gestell 3 um eine vertikal verlaufende Achse A1 drehbar gelagertes Karussell 4. Weitere Glieder des Roboterarms 2 sind im Falle des vorliegenden Ausführungsbeispiels eine Schwinge 5, ein Armausleger 6 und eine vorzugsweise mehrachsige Roboterhand 7 mit einer als Flansch 8 ausgeführten Befestigungsvorrichtung zum Befestigen eines nicht näher dargestellten Endeffektors. Die Schwinge 5 ist am unteren Ende z.B. an einem nicht näher dargestellten Schwingenlagerkopf auf dem Karussell 4 um eine vorzugsweise horizontale Drehachse A2 schwenkbar gelagert. Am oberen Ende der Schwinge 5 ist wiederum um eine ebenfalls vorzugsweise horizontale Achse A3 der Armausleger 6 schwenkbar gelagert. Dieser trägt endseitig die Roboterhand 7 mit ihren vorzugsweise drei Drehachsen A4, A5, A6.

Der Armausleger 6 weist im Falle des vorliegenden Ausführungsbeispiels ein schwenkbar an der Schwinge 5 gelagertes Armgehäuse 9 auf. An dem Armgehäuse 9 ist ein Handgrundgehäuse 10 des Armauslegers 6 um die Achse A4 drehbar gelagert.

Der Roboterarm 2 ist mittels dreier elektrischer Antriebsmotoren 11 in seinen drei Grundachsen und mittels dreier weiterer elektrischer Antriebsmotoren 11 in seinen drei Handachsen beweglich.

Die Robotersteuerung 12 des Roboters 1 ist ausgebildet bzw. eingerichtet, ein Roboterprogramm auszuführen, durch welches die Gelenke 14 des Roboterarms 2 gemäß des Roboterprogramms automatisiert oder in einem Handfahrbetrieb automatisch verstellt bzw. drehbewegt werden können. Dazu ist die Robotersteuerung 12 mit den ansteuerbaren elektrischen Antriebsmotoren 11 verbunden, die ausgebildet sind, die Gelenke 14 des Roboterarms 2 zu verstellen. Mit der Robotersteuerung 12 ist eine im Falle des vorliegenden Ausführungsbeispiels mobile Sicherheits-Grundsteuervorrichtung 15 steuerungstechnisch verbunden. Mittels eines beispielhaften Halters 16 ist ein mobiles Endgerät 17, das im Falle des gezeigten Ausführungsbeispiels als ein Tablet-PC dargestellt ist, verbunden, wodurch der Roboter-Bedienhandgerätverbund 18 gebildet wird.

Die Robotersteuerung 12 kann über eine insbesondere separate Kommunikationsverbindung 30 steuerungstechnisch mit dem mobilen Endgerät 17 verbunden sein.

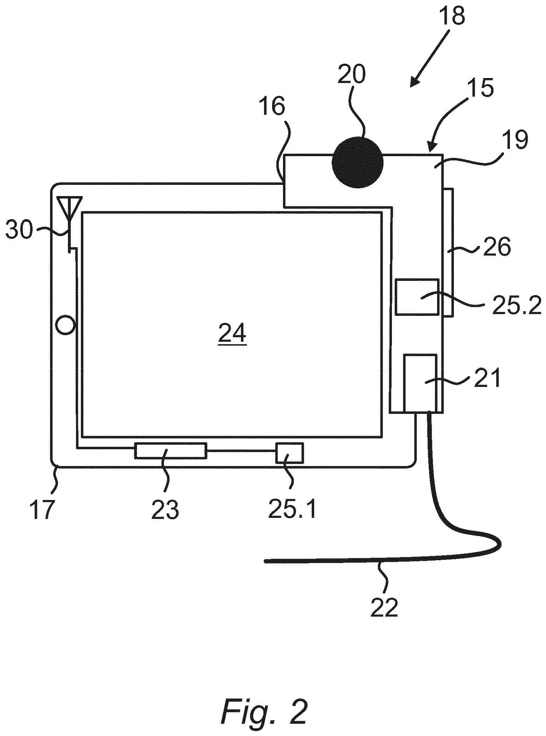

Die Fig. 2 zeigt eine beispielhafte Ausführungsform des Roboter-Bedienhandgerätverbunds 18. Der Roboter-Bedienhandgerätverbund 18 umfasst in diesem Fall die eigenständige mobile Sicherheits-Grundsteuervorrichtung 15, das eigenständige mobile Endgerät 17 und den Halter 16.

Die mobile Sicherheits-Grundsteuervorrichtung 15 weist ein Gehäuse 19, ein am Gehäuse 19 angeordnetes Nothalt-Schaltmittel 20 und eine Kommunikationsvorrichtung 21 zum steuerungstechnischen Verbinden der mobilen Sicherheits-Grundsteuervorrichtung 15 mit der Robotersteuerung 12 (Fig. 1) beispielsweise mittels des Verbindungskabels 22. Außerdem weist die mobile Sicherheits-Grundsteuervorrichtung 15 einen Zustimmtaster 26 auf.

Das eigenständige mobile Endgerät 17 weist eine Endgeräte-Steuerung 23 und einen Bildschirm 24 auf.

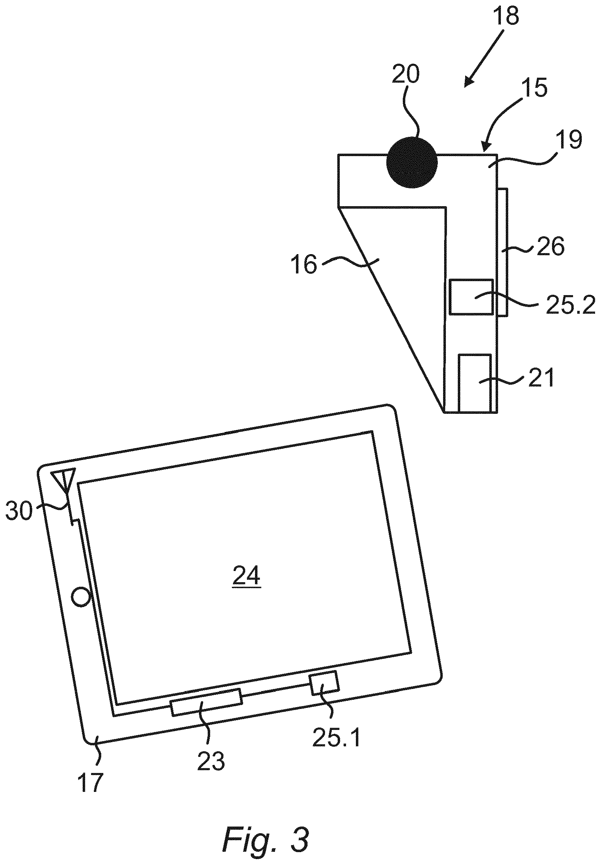

Der Halter 16 ist ausgebildet, die mobile Sicherheits-Grundsteuervorrichtung 15 mit dem mobilen Endgerät 17 in einer manuell lösbaren Verbundanordnung, wie in Fig. 2 gezeigt, mechanisch zu verbinden, um den Roboter-Bedienhandgerätverbund 18 zu bilden. Wird der Roboter-Bedienhandgerätverbund 18 aufgelöst, beispielsweise durch ein manuelles Lösen des Halters 16 derart, dass das mobile Endgerät 17 mechanisch von der mobile Sicherheits-Grundsteuervorrichtung 15 getrennt ist, dann sind sowohl das mobile Endgerät 17, als auch die mobile Sicherheits-Grundsteuervorrichtung 15 jeweils eigenständig und mechanisch autark handhabbar und beispielsweise, wie in Fig. 3 angedeutet, jeweils unabhängig voneinander im Raum positionierbar und orientierbar.

Der Roboter-Bedienhandgerätverbund 18 weist demgemäß eine eigenständige mobile Sicherheits-Grundsteuervorrichtung 15 auf, die ein Gehäuse 19, ein am Gehäuse 19 angeordnetes Nothalt-Schaltmittel 20 und eine Kommunikationsvorrichtung 21 zum steuerungstechnischen Verbinden der mobilen Sicherheits-Grundsteuervorrichtung 15 mit der Robotersteuerung 12 des Roboters 1 aufweist.

Der Roboter-Bedienhandgerätverbund 18 umfasst ein eigenständiges mobiles Endgerät 17, das eine Endgeräte-Steuerung 23 und wenigstens einen Endgeräte-Beschleunigungssensor 25.1 aufweist, der ausgebildet ist, ein Beschleunigung des mobiles Endgeräts 17 in wenigstens einem seiner Freiheitsgrade zu messen.

Außerdem weist der Roboter-Bedienhandgerätverbund 18 einen Halter 16 auf, der ausgebildet ist, die mobile Sicherheits-Grundsteuervorrichtung 15 mit dem mobilen Endgerät 17 in einer manuell lösbaren Verbundanordnung, wie in Fig. 2 gezeigt, mechanisch zu verbinden, um den Roboter-Bedienhandgerätverbund 18 zu bilden.

Die mobile Sicherheits-Grundsteuervorrichtung 15 weist erfindungsgemäß wenigstens einen Grundsteuerungs-Beschleunigungssensor 25.2 auf, der ausgebildet ist, ein Beschleunigung der mobilen Sicherheits-Grundsteuervorrichtung 15 in wenigstens einem seiner Freiheitsgrade zu messen, weleher derselbe Freiheitsgrad ist, in dem auch der Endgeräte-Beschleunigungssensor 25.1 die Beschleunigung des mobilen Endgeräts 17 misst.

Die Endgeräte-Steuerung 23 des mobilen Endgeräts 17 ist ausgebildet, von dem Endgeräte-Beschleunigungssensor 25.1 gemessene Beschleunigungswerte an die Robotersteuerung 12 zu übermitteln, die mobile Sicherheits-Grundsteuervorrichtung 15 ist ausgebildet, von dem Grundsteuerungs-Beschleunigungssensor 25.2 gemessene Beschleunigungswerte über die Kommunikationsvorrichtung 21 an die Robotersteuerung 12 zu übermitteln und die Robotersteuerung 12 ist eingerichtet, die Beschleunigungswerte des mobilen Endgeräts 17 mit den Beschleunigungswerten der mobilen Sicherheits-Grundsteuervorrichtung 15 zu vergleichen und bei einer Übereinstimmung der Beschleunigungswerte des mobilen Endgeräts 17 mit den Beschleunigungswerten der mobilen Sicherheits-Grundsteuervorrichtung 15 ein den mechanischen Verbindungszustand von mobilem Endgerät 17 und mobiler Sicherheits-Grundsteuervorrichtung 15 kennzeichnendes Signal zu erzeugen.

Die Robotersteuerung 12 ist im vorliegenden Ausführungsbeispiel eingerichtet, im Falle eines durch das Signal festgestellten vorliegenden mechanischen Verbindungszustands von mobilem Endgerät 17 und mobiler Sicherheits-Grundsteuervorrichtung 15 (Fig. 2), eine robotersteuerungstechnische Kommunikation der mobilen Sicherheits-Grundsteuervorrichtung 15 mit dem mobilen Endgerät 17 zuzulassen und ist eingerichtet, im Falle eines durch das Signal festgestellten fehlenden mechanischen Verbindungszustands von mobilem Endgerät 17 und mobiler Sicherheits-Grundsteuervorrichtung 15 (Fig. 3), eine robotersteuerungstechnische Kommunikation der mobilen Sicherheits-Grundsteuervorrichtung 15 mit dem mobilen Endgerät 17 zu unterbinden.

Die Endgeräte-Steuerung 23 des mobilen Endgeräts 17 ist im Falle des vorliegenden Ausführungsbeispiels ausgebildet, von dem Endgeräte-Beschleunigungssensor 25.1 gemessene Beschleunigungswerte an die mobile Sicherheits-Grundsteuervorrichtung 15 zu übermitteln, die mobile Sicherheits-Grundsteuervorrichtung 15 ist dabei ausgebildet, von dem Grundsteuerungs-Beschleunigungssensor 25.2 gemessene Beschleunigungswerte aufzunehmen und die mobile Sicherheits-Grundsteuervorrichtung 15 ist dabei eingerichtet, die Beschleunigungswerte des mobilen Endgeräts 17 mit den Beschleunigungswerten der mobilen Sicherheits-Grundsteuervorrichtung 15 zu vergleichen und bei einer Übereinstimmung der Beschleunigungswerte des mobilen Endgeräts 17 mit den Beschleunigungswerten der mobilen Sicherheits-Grundsteuervorrichtung 15 ein den mechanischen Verbindungszustand von mobilem Endgerät 17 und mobiler Sicherheits-Grundsteuervorrichtung 15 kennzeichnendes Signal zu erzeugen.

Die mobile Sicherheits-Grundsteuervorrichtung 15 kann dabei eingerichtet sein, im Falle eines durch das Signal festgestellten vorliegenden mechanischen Verbindungszustands von mobilem Endgerät 17 und mobiler Sicherheits-Grundsteuervorrichtung 15, eine robotersteuerungstechnische Kommunikation der mobilen Sicherheits-Grundsteuervorrichtung 15 mit dem mobilen Endgerät 17 zuzulassen (Fig. 2) und die mobile Sicherheits-Grundsteuervorrichtung 15 kann dabei eingerichtet sein, im Falle eines durch das Signal festgestellten fehlenden mechanischen Verbindungszustands von mobilem Endgerät 17 und mobiler Sicherheits-Grundsteuervorrichtung 15, eine robotersteuerungstechnische Kommunikation der mobilen Sicherheits-Grundsteuervorrichtung 15 mit dem mobilen Endgerät 17 zu unterbinden (Fig. 3).

Die Robotersteuerung 12 und/oder die mobile Sicherheits-Grundsteuervorrichtung 15 kann eingerichtet sein, die Beschleunigungswerte des mobilen Endgeräts 17 mit den Beschleunigungswerten der mobilen Sicherheits-Grundsteuervorrichtung 15 zu vergleichen und ein den mechanischen Verbindungszustands von mobilem Endgerät 17 und mobiler Sicherheits-Grundsteuervorrichtung 15 kennzeichnendes Signal zu erzeugen, immer dann, wenn wenigstens einer von Endgeräte-Beschleunigungssensor 25.1 und Grundsteuerungs-Beschleunigungssensor 25.2 eine Beschleunigung des mobilen Endgeräts 17 und/oder der mobilen Sicherheits-Grundsteuervorrichtung 15 misst.

Der Grundsteuerungs-Beschleunigungssensor 25.2 kann, wie in Fig.2 und Fig. 3 dargestellt ist, an dem Gehäuse 19 der mobilen Sicherheits-Grundsteuervorrichtung 15 oder alternativ an dem mit der mobilen Sicherheits-Grundsteuervorrichtung 15 verbundenen Halter 16 angeordnet sein.

## Patentansprüche

1. Roboter-Bedienhandgerätverbund, aufweisend:
- eine eigenständige Sicherheits-Grundsteuervorrichtung (15), die ein Gehäuse (19), ein am Gehäuse (19) angeordnetes, sicherheitsrelevantes Schaltmittel (20) und eine Kommunikationsvorrichtung (21) zum steuerungstechnischen Verbinden der mobilen Sicherheits-Grundsteuervorrichtung (15) mit einer Robotersteuerung (12) eines Roboters (1) aufweist,
- ein eigenständiges mobiles Endgerät (17), das eine Endgeräte-Steuerung (23) und wenigstens einen Endgeräte-Lagesensor aufweist, der ausgebildet ist, eine Lageinformation des mobiles Endgeräts (17) in wenigstens einem seiner Freiheitsgrade zu erfassen,
- sowie einen Halter (16), der ausgebildet ist, die Sicherheits-Grundsteuervorrichtung (15) mit dem mobilen Endgerät (17) in einer manuell lösbaren Verbundanordnung mechanisch zu verbinden, um den Roboter-Bedienhandgerätverbund (18) zu bilden, **dadurch gekennzeichnet, dass** die Sicherheits-Grundsteuervorrichtung (15) wenigstens einen Grundsteuerungs-Lagesensor aufweist, der ausgebildet ist, eine Lageinformation der mobilen Sicherheits-Grundsteuervorrichtung (15) in wenigstens einem seiner Freiheitsgrade zu erfassen.

2. Roboter-Bedienhandgerätverbund nach Anspruch 1, **dadurch gekennzeichnet, dass** der Grundsteuerungs-Lagesensor ausgebildet ist, die Lageinformation der mobilen Sicherheits-Grundsteuervorrichtung (15) in wenigstens einem seiner Freiheitsgrade zu erfassen, welcher derselbe Freiheitsgrad ist, in dem auch der Endgeräte-Lagesensor die Lageinformation des mobilen Endgeräts (17) erfasst.

3. Roboter-Bedienhandgerätverbund nach Anspruch 1 oder 2, **dadurch gekennzeichnet, dass** der Endgeräte-Lagesensor ein Endgeräte-Magnetfeldsensor ist, der ausgebildet ist, eine magnetische Feldinformation bezüglich des mobiles Endgeräts (17) in wenigstens einem seiner Freiheitsgrade zu erfassen, und/oder der Grundsteuerungs-Lagesensor ein Grundsteuerungs-Magnetfeldsensor ist, der ausgebildet ist, eine magnetische Feldinformation bezüglich der mobilen Sicherheits-Grundsteuervorrichtung (15) in wenigstens einem ihrer Freiheitsgrade zu erfassen.

4. Roboter-Bedienhandgerätverbund nach einem der Ansprüche 1 bis 3, **dadurch gekennzeichnet, dass** der Endgeräte-Lagesensor ein Endgeräte-Optosensor ist, der ausgebildet ist, eine vom mobilen Endgerät (17) aus aufnehmbare Bildinformation in wenigstens einem seiner Freiheitsgrade zu erfassen, und/oder der Grundsteuerungs-Lagesensor ein Grundsteuerungs-Optosensor ist, der ausgebildet ist, eine von der mobilen Sicherheits-Grundsteuervorrichtung (15) aus aufnehmbare Bildinformation in wenigstens einem ihrer Freiheitsgrade zu erfassen.

5. Roboter-Bedienhandgerätverbund nach einem der Ansprüche 1 bis 4, **dadurch gekennzeichnet, dass** der Endgeräte-Lagesensor ein Endgeräte-Beschleunigungssensor (25.1) ist, der ausgebildet ist, eine Beschleunigungsinformation des mobilen Endgeräts (17) in wenigstens einem seiner Freiheitsgrade zu erfassen, und/oder der Grundsteuerungs-Lagesensor ein Grundsteuerungs-Beschleunigungssensor (25.2) ist, der ausgebildet ist, eine Beschleunigung der mobilen Sicherheits-Grundsteuervorrichtung (15) in wenigstens einem ihrer Freiheitsgrade zu erfassen.

6. Roboter-Bedienhandgerätverbund nach einem der Ansprüche 1 bis 5, **dadurch gekennzeichnet, dass** wenigstens eine aus der Gruppe von Endgeräte-Steuerung (23) des mobilen Endgeräts (17), mobiler Sicherheits-Grundsteuervorrichtung (15) und Robotersteuerung (12) ausgebildet ist, von dem Endgeräte-Lagesensor erfassten Lageinformationen des mobilen Endgeräts (17) mit den von dem Grundsteuerungs-Lagesensor erfassten Lageinformationen der mobilen Sicherheits-Grundsteuervorrichtung (15) zu vergleichen und bei einer Übereinstimmung der Lageinformationen des mobilen Endgeräts (17) mit den Lageinformationen der mobilen Sicherheits-Grundsteuervorrichtung (15) ein den mechanischen Verbindungszustand von mobilem Endgerät (17) und mobiler Sicherheits-Grundsteuervorrichtung (15) kennzeichnendes Signal zu erzeugen.

7. Roboter-Bedienhandgerätverbund nach Anspruch 6, **dadurch gekennzeichnet, dass** die Robotersteuerung (12) eingerichtet ist, im Falle eines durch das Signal festgestellten vorliegenden mechanischen Verbindungszustands von mobilem Endgerät (17) und mobiler Sicherheits-Grundsteuervorrichtung (15), eine robotersteuerungstechnische Kommunikation der mobilen Sicherheits-Grundsteuervorrichtung (15) mit dem mobilen Endgerät (17) zuzulassen und die Robotersteuerung (12) eingerichtet ist, im Falle eines durch das Signal festgestellten fehlenden mechanischen Verbindungszustands von mobilem Endgerät (17) und mobiler Sicherheits-Grundsteuervorrichtung (15), eine robotersteuerungstechnische Kommunikation der mobilen Sicherheits-Grundsteuervorrichtung (15) mit dem mobilen Endgerät (17) zu unterbinden.

8. Roboter-Bedienhandgerätverbund nach Anspruch 6 oder 7, **dadurch gekennzeichnet, dass** die Endgeräte-Steuerung (23) des mobilen Endgeräts (17) ausgebildet ist, von dem Endgeräte-Beschleunigungssensor (25.1) gemessene Beschleunigungswerte an die Sicherheits-Grundsteuervorrichtung (15) zu übermitteln, die Sicherheits-Grundsteuervorrichtung (15) ausgebildet ist, von dem Grundsteuerungs-Beschleunigungssensor (25.2) gemessene Beschleunigungswerte aufzunehmen und die Sicherheits-Grundsteuervorrichtung (15) eingerichtet ist, die Beschleunigungswerte des mobilen Endgeräts (17) mit den Beschleunigungswerten der mobilen Sicherheits-Grundsteuervorrichtung (15) zu vergleichen und bei einer Übereinstimmung der Beschleunigungswerte des mobilen Endgeräts (17) mit den Beschleunigungswerten der mobilen Sicherheits-Grundsteuervorrichtung (15) ein den mechanischen Verbindungszustand von mobilem Endgerät (17) und mobiler Sicherheits-Grundsteuervorrichtung (15) kennzeichnendes Signal zu erzeugen.

9. Roboter-Bedienhandgerätverbund nach einem der Ansprüche 5 bis 7, **dadurch gekennzeichnet, dass** die Endgeräte-Steuerung (23) des mobilen Endgeräts (17) ausgebildet ist, von dem Endgeräte-Beschleunigungssensor (25.1) gemessene Beschleunigungswerte mit den Beschleunigungswerten der mobilen Sicherheits-Grundsteuervorrichtung (15) zu vergleichen und bei einer Übereinstimmung der Beschleunigungswerte des mobilen Endgeräts (17) mit den Beschleunigungswerten der mobilen Sicherheits-Grundsteuervorrichtung (15) ein den mechanischen Verbindungszustand von mobilem Endgerät (17) und mobiler Sicherheits-Grundsteuervorrichtung (15) kennzeichnendes Signal zu erzeugen.

10. Roboter-Bedienhandgerätverbund nach einem der Ansprüche 6 bis 9, **dadurch gekennzeichnet, dass** die Sicherheits-Grundsteuervorrichtung (15) eingerichtet ist, im Falle eines durch das Signal festgestellten vorliegenden mechanischen Verbindungszustands von mobilem Endgerät (17) und mobiler Sicherheits-Grundsteuervorrichtung (15), eine robotersteuerungstechnische Kommunikation der mobilen Sicherheits-Grundsteuervorrichtung (15) mit dem mobilen Endgerät (17) zuzulassen und die Sicherheits-Grundsteuervorrichtung (15) eingerichtet ist, im Falle eines durch das Signal festgestellten fehlenden mechanischen Verbindungszustands von mobilem Endgerät (17) und mobiler Sicherheits-Grundsteuervorrichtung (15), eine robotersteuerungstechnische Kommunikation der mobilen Sicherheits-Grundsteuervorrichtung (15) mit dem mobilen Endgerät (17) zu unterbinden.

11. Roboter-Bedienhandgerätverbund nach einem der Ansprüche 1 bis 10, **dadurch gekennzeichnet, dass** die Robotersteuerung (12), die Endgeräte-Steuerung (23) und/oder die Sicherheits-Grundsteuervorrichtung (15) eingerichtet ist, den Grundsteuerungs-Lagesensor bezüglich des Endgeräte-Lagesensors zu kalibrieren.

12. Roboter-Bedienhandgerätverbund nach einem der Ansprüche 1 bis 11, **dadurch gekennzeichnet, dass** die Robotersteuerung (12), die Endgeräte-Steuerung (23) und/oder die Sicherheits-Grundsteuervorrichtung (15) eingerichtet ist, den Endgeräte-Lagesensor bezüglich des Grundsteuerungs-Lagesensors zu kalibrieren.

13. Roboter-Bedienhandgerätverbund nach einem der Ansprüche 1 bis 12, **dadurch gekennzeichnet, dass** der wenigstens eine Endgeräte-Lagesensor Teil einer Inertial-Messeinheit des mobilen Endgeräts (17) ist.

14. Roboter-Bedienhandgerätverbund nach einem der Ansprüche 1 bis 13, **dadurch gekennzeichnet, dass** der wenigstens eine Grundsteuerungs-Lagesensor Teil einer Inertial-Messeinheit der mobilen Sicherheits-Grundsteuervorrichtung (15) ist.

15. Roboter-Bedienhandgerätverbund nach einem der Ansprüche 5 bis 14, **dadurch gekennzeichnet, dass** die Robotersteuerung (12), das mobile Endgerät (17) und/oder die Sicherheits-Grundsteuervorrichtung (15) eingerichtet ist, die Beschleunigungswerte des mobilen Endgeräts (17) mit den Beschleunigungswerten der mobilen Sicherheits-Grundsteuervorrichtung (15) zu vergleichen und ein den mechanischen Verbindungszustand von mobilem Endgerät (17) und mobiler Sicherheits-Grundsteuervorrichtung (15) kennzeichnendes Signal zu erzeugen, immer dann, wenn wenigstens einer von Endgeräte-Beschleunigungssensor (25.1) und Grundsteuerungs-Beschleunigungssensor (25.2) eine Beschleunigung des mobilen Endgeräts (17) und/oder der mobilen Sicherheits-Grundsteuervorrichtung (15) misst.

## Claims

1. Hand-held robot operating device combination, comprising:
- an independent basic safety control device (15), which has a housing (19), a safety-relevant switching means (20) arranged on the housing (19) and a communication device (21) for connecting the mobile basic safety control device (15) to a robot controller (12) of a robot (1),
- an independent mobile terminal (17) which has a terminal control (23) and at least one terminal position sensor, which is designed to detect position information of the mobile terminal (17) in at least one of its degrees of freedom,
- and a holder (16) which is designed to mechanically connect the basic security control device (15) with the mobile terminal (17) in a manually releasable composite arrangement in order to form the robot/handheld device assembly (18), **characterized in that** the basic security control device (15) has at least one basic control position sensor, which is designed to detect position information of the mobile basic security control device (15) in at least one of its degrees of freedom.

2. Hand-held robot operating device combination according to claim 1, **characterized in that** the basic control position sensor is designed to detect the position information of the mobile safety basic control device (15) in at least one of its degrees of freedom, which is the same degree of freedom in which the terminal position sensor also detects the position information of the mobile terminal (17).

3. Hand-held robot operating device combination according to claim 1 or 2, **characterized in that** the terminal position sensor is a terminal magnetic field sensor which is designed to detect magnetic field information relating to the mobile terminal (17) in at least one of its degrees of freedom, and / or the basic control position sensor is a basic control magnetic field sensor which is designed to detect magnetic field information relating to the mobile basic security control device (15) in at least one of its degrees of freedom.

4. Hand-held robot operating device combination according to one of claims 1 to 3, **characterized in that** the terminal position sensor is a terminal optosensor which is designed to detect image information which can be recorded from the mobile terminal (17) in at least one of its degrees of freedom, and / or the basic control position sensor is a basic control optosensor which is designed to acquire image information which can be recorded by the mobile security basic control device (15) in at least one of its degrees of freedom.

5. Hand-held robot operating device combination according to one of claims 1 to 4, **characterized in that** the terminal position sensor is a terminal acceleration sensor (25.1) which is designed to record acceleration information of the mobile terminal (17) in at least one of its degrees of freedom, and / or the basic control position sensor is a basic control acceleration sensor (25.2), which is designed to detect an acceleration of the mobile basic security control device (15) in at least one of its degrees of freedom.

6. Hand-held robot operating device combination according to one of claims 1 to 5, **characterized in that** at least one of the group of terminal controls (23) of the mobile terminal (17), mobile basic security control device (15) and robot controller (12) is formed by the terminal position sensor of the mobile terminal device (17) with the position information of the mobile security basic control device (15) detected by the basic control position sensor and, if the position information of the mobile terminal (17) matches the position information of the mobile security basic control device (15), the mechanical connection state of to produce a mobile terminal (17) and a mobile security basic control device (15) characterizing signal.

7. Hand-held robot operating device combination according to claim 6, **characterized in that** the robot controller (12) is set up, in the event of a mechanical connection state of the mobile terminal device (17) and the mobile basic security control device (15), ascertained by the signal, to allow a robot control communication of the mobile of the control device (15) with the mobile terminal (17) and the robot controller (12) is set up, in the event of a missing mechanical connection state of the mobile terminal (17) and the mobile basic security control device (15) ascertained by the signal, a robot control-related communication of the prevent mobile security basic control device (15) with the mobile terminal (17) .

8. Hand-held robot operating device combination according to claim 6 or 7, **characterized in that** the terminal control (23) of the mobile terminal (17) is designed to transmit acceleration values measured by the terminal acceleration sensor (25.1) to the basic security control device (15), the basic security control device (15) is designed to record acceleration values measured by the basic control acceleration sensor (25.2) and the basic security control device (15) is set up to compare the acceleration values of the mobile terminal (17) with the acceleration values of the mobile basic security control device (15) and if the acceleration values match of the mobile terminal (17) with the acceleration values of the mobile security basic control device (15) to generate a signal characterizing the mechanical connection state of the mobile terminal (17) and the mobile security basic control device (15).

9. Hand-held robot operating device combination according to one of claims 5 to 7, **characterized in that** the terminal control (23) of the mobile terminal (17) is designed to compare acceleration values measured by the terminal acceleration sensor (25.1) with the acceleration values of the mobile basic safety control device (15) and if the acceleration values of the mobile terminal (17) with the acceleration values of the mobile security basic control device (15) to generate a signal characterizing the mechanical connection state of the mobile terminal (17) and mobile security basic control device (15).

10. Hand-held robot operating device combination according to one of claims 6 to 9, **characterized in that** the basic security control device (15) is set up, in the event of a mechanical connection state of the mobile terminal device (17) and the mobile basic security control device (15), which is determined by the signal, a robot control communication of the mobile basic security control device (15) with the mobile terminal (17) and the basic security control device (15) is set up, in the event of a missing mechanical connection state of the mobile terminal device (17) and the mobile basic security control device (15), detected by the signal, a robot control communication of the mobile basic security control device (15) with the mobile terminal (17).

11. Hand-held robot operating device combination according to one of claims 1 to 10, **characterized in that** the robot controller (12), the terminal device controller (23) and / or the basic security control device (15) is set up to calibrate the basic controller position sensor with respect to the terminal device position sensor.

12. Hand-held robot operating device combination according to one of claims 1 to 11, **characterized in that** the robot controller (12), the terminal control (23) and / or the basic safety control device (15) is set up to calibrate the terminal position sensor with respect to the basic control position sensor.

13. Hand-held robot operating device combination according to one of claims 1 to 12, **characterized in that** the at least one terminal position sensor is part of an inertial measuring unit of the mobile terminal (17).

14. Hand-held robot operating device combination according to one of claims 1 to 13, **characterized in that** the at least one basic control position sensor is part of an inertial measuring unit of the mobile basic safety control device (15).

15. Hand-held robot operating device combination according to one of claims 1 to 14, **characterized in that** the robot controller (12), the mobile terminal device (17) and/or the basic security control device (15) is set up to compare the acceleration values of the mobile terminal device (17) with the acceleration values of the mobile basic security control device (15) and to generate a signal which characterizes the mechanical connection state of the mobile terminal (17) and the mobile basic security control device (15) whenever at least one of the terminal acceleration sensor (25.1) and the basic control acceleration sensor (25.2) accelerates the mobile terminal (17) and/or the mobile security basic control device (15).

## Revendications

1. Combinaison de dispositif de commande de robot portatif, comprenant:
- un dispositif de commande de sécurité de base indépendant (15), qui a un boîtier (19), un moyen de commutation de sécurité (20) disposé sur le boîtier (19) et un dispositif de communication (21) pour connecter le dispositif de commande de sécurité de base mobile (15) à un contrôleur de robot (12) d'un robot (1),
- un terminal mobile indépendant (17) qui a une commande terminale (23) et au moins un capteur de position de terminal, qui est conçu pour détecter des informations de position du terminal mobile (17) dans au moins un de ses degrés de liberté,
- et un support (16) qui est conçu pour connecter mécaniquement le dispositif de commande de sécurité de base (15) avec le terminal mobile (17) dans un agencement composite libérable manuellement afin de former l'ensemble robot / dispositif portable (18), **caractérisé en ce que** le dispositif de commande de sécurité de base (15) possède au moins un capteur de position de commande de base, qui est conçu pour détecter des informations de position du dispositif de commande de sécurité de base mobile (15) dans au moins un de ses degrés de liberté.

2. Combinaison de dispositif de commande de robot portatif selon la revendication 1, **caractérisé en ce que** le capteur de position de commande de base est conçu pour détecter les informations de position du dispositif de commande de base de sécurité mobile (15) dans au moins un de ses degrés de liberté, qui est le même degré de liberté dans lequel le capteur de position de terminal détecte également les informations de position du terminal mobile (17).

3. Combinaison de dispositif de commande de robot portatif selon la revendication 1 ou 2, **caractérisée en ce que** le capteur de position de terminal est un capteur de champ magnétique de terminal qui est conçu pour détecter des informations de champ magnétique relatives au terminal mobile (17) dans au moins un de ses degrés de liberté, et / ou le capteur de position de commande de base est un capteur de champ magnétique de commande de base qui est conçu pour détecter des informations de champ magnétique relatives au dispositif de commande de sécurité de base mobile (15) dans au moins un de ses degrés de liberté.

4. Combinaison de dispositif de commande de robot portatif selon l'une des revendications 1 à 3, **caractérisée en ce que** le capteur de position de terminal est un optocapteur de terminal qui est conçu pour détecter des informations d'image qui peuvent être enregistrées à partir du terminal mobile (17) dans au moins l'un parmi ses degrés de liberté et / ou le capteur de position de commande de base est un capteur optique de commande de base conçu pour acquérir des informations d'image qui peuvent être enregistrées par le dispositif de commande de base de sécurité mobile (15) dans au moins un de ses degrés de liberté.

5. Combinaison de dispositif de commande de robot portatif selon l'une des revendications 1 à 4, **caractérisée en ce que** le capteur de position de terminal est un capteur d'accélération de terminal (25.1) qui est conçu pour enregistrer des informations d'accélération du terminal mobile (17) dans au moins l'un des ses degrés de liberté et / ou le capteur de position de commande de base est un capteur d'accélération de commande de base (25.2), qui est conçu pour détecter une accélération du dispositif de commande de sécurité de base mobile (15) dans au moins un de ses degrés de liberté.

6. Combinaison de dispositif de commande de robot portatif selon l'une des revendications 1 à 5, **caractérisée en ce qu'**au moins une des commandes du terminal (23) du terminal mobile (17), du dispositif de contrôle de sécurité de base mobile (15) et le contrôleur de robot (12) est formé par le capteur de position de terminal du dispositif de terminal mobile (17) avec les informations de position du dispositif de commande de base de sécurité mobile (15) détectées par le capteur de position de commande de base et, si les informations de position du mobile le terminal (17) fait correspondre les informations de position du dispositif de commande de base de sécurité mobile (15), l'état de connexion mécanique de pour produire un terminal mobile (17) et un dispositif de commande de base de sécurité mobile (15) caractérisant le signal.

7. Combinaison de dispositif de commande de robot portatif selon la revendication 6, **caractérisée en ce que** le contrôleur de robot (12) est configuré, en cas d'état de connexion mécanique du dispositif terminal mobile (17) et du dispositif de commande de sécurité de base mobile (15), constatée par le signal, pour permettre une communication de commande du robot du mobile du dispositif de commande (15) avec le terminal mobile (17) et le contrôleur du robot (12) est mis en place, en cas de manque de connexion mécanique du terminal mobile (17) et du dispositif de commande de sécurité de base mobile (15) constatée par le signal, une communication liée au contrôle du robot du dispositif de commande de base de sécurité mobile empêchant (15) avec le terminal mobile (17).

8. Combinaison de dispositif de commande de robot portatif selon la revendication 6 ou 7, **caractérisée en ce que** la commande de terminal (23) du terminal mobile (17) est conçue pour transmettre des valeurs d'accélération mesurées par le capteur d'accélération de terminal (25.1) à la commande de sécurité de base (15), le dispositif de contrôle de sécurité de base (15) est conçu pour enregistrer les valeurs d'accélération mesurées par le capteur d'accélération de contrôle de base (25.2) et le dispositif de contrôle de sécurité de base (15) est configuré pour comparer les valeurs d'accélération du terminal mobile (17) avec les valeurs d'accélération du dispositif de commande de sécurité de base mobile (15) et si les valeurs d'accélération correspondent du terminal mobile (17) aux valeurs d'accélération du dispositif de commande de base de sécurité mobile (15) pour générer un signal caractérisant la état de connexion mécanique du terminal mobile (17) et du dispositif de commande de base de sécurité mobile (15).

9. Combinaison de dispositif de commande de robot à main selon l'une des revendications 5 à 7, **caractérisée en ce que** la commande de terminal (23) du terminal mobile (17) est conçue pour comparer les valeurs d'accélération mesurées par le capteur d'accélération de terminal (25.1) avec l'accélération valeurs du dispositif de commande de sécurité de base mobile (15) et si les valeurs d'accélération du terminal mobile (17) avec les valeurs d'accélération du dispositif de commande de base de sécurité mobile (15) pour générer un signal caractérisant l'état de connexion mécanique du terminal mobile (17) et dispositif de commande de base de sécurité mobile (15).

10. Combinaison de dispositif de commande de robot portatif selon l'une des revendications 6 à 9, **caractérisée en ce que** le dispositif de commande de sécurité de base (15) est mis en place, en cas d'état de connexion mécanique du terminal mobile (17) et du mobile un dispositif de commande de sécurité de base (15), qui est déterminé par le signal, une communication de commande de robot du dispositif de commande de sécurité de base mobile (15) avec le terminal mobile (17) et le dispositif de commande de sécurité de base (15) est établie, en en cas d'un état de connexion mécanique manquant du terminal mobile (17) et du terminal mobile de contrôle de sécurité (15), détecté par le signal, une communication de commande par robot du terminal mobile de contrôle de sécurité (15) avec le terminal mobile (17).

11. Combinaison de dispositif de commande de robot portatif selon l'une des revendications 1 à 10, **caractérisée en ce que** le contrôleur de robot (12), le contrôleur de dispositif terminal (23) et / ou le dispositif de commande de sécurité de base (15) est configuré pour calibrer le capteur de position du contrôleur de base par rapport au capteur de position du terminal.

12. Combinaison de dispositif de commande de robot portatif selon l'une des revendications 1 à 11, **caractérisée en ce que** le contrôleur de robot (12), la commande de terminal (23) et / ou le dispositif de commande de sécurité de base (15) est configuré pour calibrer le capteur de position terminal par rapport au capteur de position de commande de base.

13. Combinaison de dispositif de commande de robot portatif selon l'une des revendications 1 à 12, **caractérisée en ce que** le au moins un capteur de position de terminal fait partie d'une unité de mesure inertielle du terminal mobile (17).

14. Combinaison de dispositif de commande de robot portatif selon l'une des revendications 1 à 13, **caractérisée en ce que** l'au moins un capteur de position de commande de base fait partie d'une unité de mesure inertielle du dispositif de commande de sécurité de base mobile (15).

15. Combinaison de dispositif de commande de robot portatif selon l'une des revendications 1 à 14, **caractérisée en ce que** le contrôleur de robot (12), le dispositif de terminal mobile (17) et / ou le dispositif de commande de sécurité de base (15) est configuré pour comparer les les valeurs d'accélération du dispositif de terminal mobile (17) avec les valeurs d'accélération du dispositif de contrôle de sécurité de base mobile (15) et pour générer un signal qui caractérise l'état de connexion mécanique du terminal mobile (17) et du dispositif de contrôle de sécurité de base mobile (15) chaque fois qu'au moins l'un du capteur d'accélération de terminal (25.1) et du capteur d'accélération de commande de base (25.2) accélère le terminal mobile (17) et / ou le dispositif de commande de base de sécurité mobile (15).
